Europäisches Patentamt

European Patent Office

Office européen des brevets

(11) Publication number: **0 451 112 A1**

# EUROPEAN PATENT APPLICATION

(21) Application number: 91830067.4

(22) Date of filing: 27.02.91

(51) Int. Cl.⁵: **C01B 33/34**

(30) Priority: 27.02.90 IT 4768390

(43) Date of publication of application:
**09.10.91 Bulletin 91/41**

(84) Designated Contracting States:
**AT BE CH DE DK ES FR GB GR LI LU NL SE**

(71) Applicant: **ILVA S.p.A.**
**Via Corsica 4**
**I-16128 Genoa(IT)**

(72) Inventor: **Magolati, Armando**
**Via A.L. Muratori 38**
**I-57100 Livorno(IT)**

(74) Representative: **Mariani, Giulio**
**c/o Centro Sviluppo Materiali SpA P.O. BOX 10747**
**I-00100 Roma Eur(IT)**

(54) **Process for zeolite production.**

(57) According to the present invention, by means of small variations to a single basic process it is possible to obtain a vaste range of diverse zeolites, which can be used as detergent bases, molecular sieves, ion exchangers, catalyst bases, etc.

This is achieved easily even starting from vaste materials such as steelworks slags, recycled acidic and basic by-products and wastes from other processes. Hence the process offers the twofold advantage of utilizing substances which would otherwise be difficult to dispose of, while providing a vaste range of diverse products at low cost.

EP 0 451 112 A1

The present invention concerns an improved process for the production of zeolites. More precisely it concerns a process which, through limited variations, permits the production of various types of zeolites, even starting from waste materials such as steelworks slags. Zeolites are a kind of polymer formed of hydrated sodium aluminosilicates, characterized by a great variety of possible combinations of the number of molecules of sodium oxide, silica, alumina and water present in the zeolite molecule. Consequently, there exists a great number of different zeolites which find fields of application that may be very diverse. Many zeolites are natural, others are man-made, sometimes by modifying the structure and/or composition of the natural variety. Other starting materials are silicates and aluminosilicates and all materials containing these or from which they can be derived; because of their composition and abundance, steelworks slags, as well as scrap and wastes from aluminium-production processes are partucularly interesting in this regard.

Disposal of these substances poses various problems. Their transformation into useful products thus affords the twofold benefit of facilitating disposal, while reducing the costs of the raw materials needed to obtain the products concerned.

The tranformation process of the raw materials considered involves attack with sulphuric acid and then with basic substances to precipitate silica and alumina gels or silicates and aluminates.

During these phases of the process use can be made of sulphuric acid, sodium hydroxide and other waste basic substances deriving from other industrial processes, hence helping reduce further possible sources of pollution.

In point of fact, steelworks slags also have other uses, for instance in the. manufacture of cement and in the preparation of sub-bases for roads and the like. However, such uses are limited to the immediate vicinity of the steelworks because of the cost of transport compared with the actual value of the materials and, in the case of roads, because most of the road network has already been built, so the construction of new roads or the remaking of existing ones are rare events.

Hence there is a real need to combine disposal of industrial wastes with the manufacture of useful products such as zeolites. Many methods have been proposed for the production of zeolites from steelworks slags. French patent application 2 543 939 refers to the production of a Type A zeolite by dissolution of blast-furnace slag with sulphuric acid at a maximum pH of 1.5 and enrichment of the solution with aluminium ions; precipitation from said solution of an aluminium-rich silicate gel by the addition of calcium carbonate; separation of the gypsum thus formed and neutralization of the gel suspension; filtration and treatment of the solid filtrate with caustic soda and consequent precipitation of the zeolite.

Japanese patent application 58-167421 treats slag in the molten state with an alkaline-earth metal carbonate; the molten mass is cooled and then treated with alkaline solutions containing metallic aluminium, potassium hydroxide and or aluminium hydroxide, etc.

Other patents and publications refer to the production of zeolites designed for specific uses.

In the known methods for the production of zeolites the main problem lies in the fact that with a given plant and treatment process it is possible to produce only a restricted number of zeolites that are fairly similar to one another. Moreover efficiency of the attack on the solid feed material is relatively low and, as in the case of the French application, it leads to the production of large quantities of gypsum, which then have to be disposed of.

The present invention aims to reduce these drawbacks by providing a process wherein highly efficient initial dissolution of the solid feed material is combined with the possibility of producing various types of zeolites. According to the present invention, in a process for the production of zeolites including a phase of acid attack of a solid alumina-containing silicate material and possible dissolution of the reaction mass, a subsequent phase involving the precipitation of silica gel and alumina gel and a final phase with the production of zeolites starting from said gels, improvements are introduced in each of the phases so as to attain the above-mentioned aims of the invention.

The initial attack and subsequent dissolution phase is achieved through the following sequence of operations:
- start with a solid alumina-containing silicate material whose grain-size is smaller than 35 mesh;
- attack this material, in a stirred reactor, with sulphuric acid whose concentration is greater than 20%, the acid/mineral ratio (by weight) being between 1.3 and 6, at a starting temperature between 25 and 40 °C, to obtain a reaction mass at a temperature between 150 and 230 °C in a time ranging from 15 to 45 minutes;
- leave the reaction mass to cool for between 30 and 180 minutes until the temperature is between 60 and 150 °C.

Of course, in this first phase the silicate-based solid material is preferably particulate blast-furnace slag; under the conditions described above the efficiency of the attack on the solid material is between 94 and 98%. If a very concentrated acid has been used at high temperature the reaction mass is practically solid, so it has to be dissolved by means of basic aqueous solutions - preferably recycled from subsequent operations - and containing sodium hydroxide, sodium aluminates and/or silicates, etc.

This addition of basic solutions may anyway be necessary to attain the desired final conditions of the dispersion, which will have a specific gravity between 1.2 and 1.6, an $SiO_2$ content between 30 and 300 g/l, an $Al_2O_3$ content between 10 and 120 g/l and a pH between 1 and 1.5.

In this operation it is as well to add aluminium scrap or aluminium compounds to the solution if the concentration of aluminium in the dispersion is too low.

It is also important to avoid the presence of chlorides, which are harmful in the subsequent silica- and alumina-gel precipitation phase. After dissolution, the solution is sent to a clarifier, at 45-60 °C and treated with flocculants (0.2-0.5 g dry flocculant per litre). The clarified solution must contain less than 0.1 mg/l solid residues.

The clarified solution is then treated in a stirred reactor at 40-60 °C with basic solutions, preferably recycled from subsequent operations, or with NaOH to precipitate at a controlled pH of 3.5 silica gel which is filtered and washed. The remaining solution can possibly be treated with scrap aluminium metal to control the dissolved aluminium content. The solution is brought to a pH between 3.5 and 3.75 at a temperature of 40-80 °C in a stirred reactor and held there for one to two hours so as to get rid of any impurities that may still exist. The solution, which must contain less than 0.1 mg/l of suspended solids, is treated with 50% NaOH to attain a pH of 4-4.5, to precipitate the alumina gel which is filtered and washed.

The solution containing silica- and alumina-sols can also be brought directly to pH between 4 and 4,5, to obtain the coprecipitation of the silica- and alumina-gels.

The silica- and alumina-gels, thickened to 170-230 and 150-250 g/l respectively, can be used as such for the production of zeolites, or they can first be transformed into sodium silicate and sodium aluminate, respectively, since these simplify the zeolite production. Sodium aluminate and sodium silicate are produced by known methods.

For the subsequent production of zeolites, the silica and alumina gels or the sodium silicate and sodium aluminate are mixed in water with sodium hydroxide. The quantities used are such that in the dispersion, for every mol of $Al_2O_3$, there are 1 to 12 mols of $Na_2O$, from 2 to 20 mols of $SiO_2$ and from 30 to 320 mols of $H_2O$ present. The pH is regulated between 8 and 13 and the temperature between 60 and 200 °C. Zeolites of various types can be obtained by regulating temperature and bath composition.

More precisely, to obtain Type A zeolites the reagents are mixed in such a way that for ever mol of $Al_2O_3$ there are 1.6-3 mols of $Na_2O$, 2-3 mols of $SiO_2$ and 35-60 mols of $H_2O$ present. The pH is preferably between 9 and 12 and the temperature between 65 and 100 °C.

In the case of Type X zeolites, for every mol of $Al_2O_3$ in the starting dispersion there are from 3 to 6 mols of $Na_2O$, from 3 to 6 mols of $SiO_2$ and from 120 to 170 mols of water. The pH is preferably between 10 and 12, while the temperature is between 100 and 120 °C.

Where Type Y zeolites are concerned, for every mol of $Al_2O_3$ in the starting solution there are from 6 to 9 mols of $Na_2O$, from 14 to 22 mols of $SiO_2$ and from 200 to 320 mols of $H_2O$. The pH is between 8 and 12 and the temperature between 120 and 200 °C.

When the temperature is over 100 °C, of course, adequate overpressure is adopted.

It is preferable that the crystallization of the zeolites occurs in the presence of crystallization nuclei, the quantity of which ranges between 1 and 10% by weight of crystallized zeolite solution.

The nuclei are prepared from solutions similar to those from the production of the zeolites, subjected to continuous stirring in a batch reactor; the temperature is 45-80 °C and the time 8-10 hours.

The present invention will now be described in greater detail in relation to some actual embodiments which are given purely by way of example without in any way limiting the breadth and objects of the invention.

One thousand kilograms of minus 35 mesh blast-furnace slag are dispersed in 5.900 litres of water to which 5.600 kg of 25% sulphuric acid are added. The initial temperature is 30 °C. The reaction mass is continuously stirred for 35 minutes in a closed reactor under pressure until a temperature of 180 °C is attained. This is held for 30 minutes, after which the mass is cooled to below 100 °C in 80 minutes.

The mass obtained at the end of the reaction is then treated with wash water and/or liquors recycled from subsequent stages and containing at least one subsyance which may be sodium hydroxide, sodium aluminate or sodium silicate.

The dispersion thus obtained has a specific gravity of 1.29, a silica content of 39.2 g/l, an alumina content of 12.6 g/l and a pH of 1.5. The suspension is sent to a clarifier tank where at an initial temperature of 72 °C and a final temperature of 48 °C about 875 kg of gypsum are separated. The clear solution is treated with 113 litres of 25% sodium hydroxide; a pH of 3.5 is attained and 340 kg (dry weight) of silica gel are precipitated. The silica gel in 1.000 litres of water at a pH of 3.5 is treated with 600 litres of 45% sodium hydroxide to obtain a solution of sodium silicate containing 211 g/l of $SiO_2$ and 203 g/l of $Na_2O$. The solution from which the silica gel has been separated is then treated with 141 litres of 43% NaOH to precipitate 116 kg of alumina gel, which is further treated with 180 kg of 45% NaOH to obtain a solution of sodium aluminate containing 90 g/l $Al_2O_3$ and 110 g/l of $Na_2O$. These solutions are used as indicated in the following examples.

Example 1

In a continuously-stirred, steam-heated reactor 1120 litres of sodium aluminate and sodium hydroxide solution (containing 1K mol of $Al_2O_3$ and 1K mol of $Na_2O$) are mixed with 1191 litres of sodium silicate and sodium hydroxide solution (containing 2K mols of $SiO_2$ and 1K mol of $Na_2O$). The pH is adjusted to 11 and the temperature is brought to 70 °C. After the gel has stabilized the temperature is raised to 90-100 °C where it is held steady for 6-8 hours, resulting in the precipitation of a Type A zeolite whose composition is $Na_2O_{12}$-$(AlO_2)_{12}(SiO_2)_{12} \times 27\,H_2O$.

Zeolites of variable composition, with the $SiO_2/Al_2O_3$ ratio between 1.7 and 2.1, and the $Na_2O/Al_2O_3$ ratio between 0.8 and 1.1 can be obtained by varying the composition of the starting solution.

Example 2

In a continuously-stirred, steam heated reactor 1270 litres of a sodium aluminate and sodium hydroxide solution (containing 1K mol of $Al_2O_3$ and 1K mol of $Na_2O$) are mixed with 1330 litres of sodium silicate and sodium hydroxide (containing 3K mols of $SiO_2$ and 2.6 K mols of $Na_2O$). The pH is adjusted to 9-10 and the temperature is about 100 °C. After stabilization of the gel the temperature is brough to 120 °C where it is held for 6-8 hours, resulting in the precipitation of a Type X zeolite whose composition is $Na_2O_{85}(AlO_2)_{85}$-$(SiO_2)_{105} \times 270\,H_2O$.

Type X zeolites of variable composition, with the $SiO_2/Al_2O_3$ ratio between 1.6 and 2.9 and the $Na_2O/Al_2O_3$ ratio between 0.8 and 1.1 can be obtained by adjusting the composition of the starting solution.

Example 3

In a continuously-stirred reactor at room temperature sodium aluminate and sodium silicate are mixed with water and sodium hydroxide. The ensuing composition is $Na_2O/Al_2O_3/SiO_2/H_2O$ = 6.5/1.0/16.0/250. Crystallization nuclei prepared as indicated earlier are added and the reactor is stirred for an hour. The temperature is brought up to 90 °C using steam and an operating pressure of 15 atm. After 6 hours the mixture is brought to 180 °C.

The ensuing Type Y zeolite has a composition of $Na_2O_{56}(AlO_2)_{56}(SiO_2)_{135} \times 254\,H_2O$.

Type Y zeolites of variable composition, with the $SiO_2/Al_2O_3$ ratio between 1.5 and 6 and the $Na_2O/Al_2O_3$ ratio between 0.8 and 1.1 can be obtained by adjusting the composition of the starting solution.

**Claims**

1. Improved process for the production of zeolites including a phase of acid attack of a solid alumina-containing silicate material and possible dissolution of the reaction mass, a subsequent phase involving the precipitation of silica gel and alumina gel, a phase with the production of zeolites from said gels, characterized by the fact that the attack and dissolution phase is implemented by the following combination of operations:

   - start with an alumina-based silicate material whose grain size is smaller than 35 mesh;
   - attack said material in a stirred reactor with sulphuric acid whose concentration is greater than 20%, the acid/mineral ratio (by weight) being between 1.3 and 6, at a starting temperature between 25 and 40 °C, to obtain a reaction mass a a temperature between 150 and 230 °C in a time ranging from 15 to 45 minutes;
   - leave said reaction mass for between 30 and 180 minutes, until the temperature is between 60 and 150 °C;
   - treat said mass with basic solutions to obtain a dispersion having a specific gravity between 1.2 and 1.6, an $SiO_2$ content between 30 and 300 g/l, an $Al_2O_3$ content between 10 and 120 g/l and a pH between 1 and 1.5;
   - clarify said dispersion at 45-60 °C with flocculants, using between 0.2 and 0.5 g of dry flocculant per litre of flocculant;
   - treat clarified solution at 40-60 °C with basic solutions in a stirred reactor to attain a pH between 3.5 and 4.5 to precipitate at least silica gel and alumina gel, in turn;
   - treat in a known way at least one of said silica and alumina gels with sodium hydroxide to obtain sodium silicate and sodium aluminate;
   - mix sodium hydroxide, sodium silicate and sodium aluminate in water to obtain a sol containing for every mol of $Al_2O_3$ from 1 to 12 mols of $Na_2O$, from 2 to 20 mols of $SiO_2$ and from 30 to 320 mols of $H_2O$, at a pH between 8 and 13 and a temperature between 60 and 200 °C.

2. Process as per claim 1, characterized by the fact that said silicate-based solid material is blastfurnace slag.

3. Process as per Claim 1, characterized by the fact that after clarification the solution is treated with at least one substance which may be either aluminium or aluminium compounds.

4. Process as per Claim 1, characterized by the fact that Type A zeolites are obtained by mixing water, sodium hydroxide, sodium aluminate and sodium silicate in such a way that for one mol of $Al_2O_3$ there are from 1.6 to 3 mols of $Na_2O$, from 2 to 3 mols of $SiO_2$ and from 35 to 60 mols $H_2O$, at a pH between 9 and 12 and a temperature between 65 and 100 °C.

5. Process as per Claim 1, characterized by the fact that Type X zeolites are obtained by mixing water, sodium hydroxide, sodium aluminate and sodium silicate in such a way that for one mol of $Al_2O_3$ there are from 3 to 6 mols of $Na_2O$, from 3 to 6 mols of $SiO_2$ and from 120 to 170 mols of water, at a pH between 10 and 12 and a temperature between 100 and 120 °C.

6. Process as per Claim 1, characterized by the fact that Type Y zeolites are obtained by mixing water, sodium hydroxide, sodium aluminate and sodium silicate in such a way that for one mol of $Al_2O_3$ there are from 6 to 9 mols of $Na_2O$, from 14 to 22 mols of $SiO_2$ and from 200 to 320 mols of $H_2O$, at a pH between 8 and 12 and a temperature between 120 and 200 °C.

7. Process as per Claim 1, characterized by the fact that the production of zeolites occurs in the presence of a quantity of crystallization nuclei ranging from 1 to 10% by weight of crystallized zeolite solution prepared in a similar way to that for the production of the relevant zeolites, at a temperature of 45-80 °C and a time between 8 and 18 hours.

8. Process as per Claim 4, characterized by the fact that by adjusting the composition of the starting solution in the predetermined ranges, Type A zeolites are obtained wherein the $SiO_2/Al_2O_3$ ratio is between 1.7 and 2.1 and the $Na_2O/Al_2O_3$ ratio is between 0.8 and 1.1.

9. Process as per Claim 5, characterized by the fact that by adjusting the composition of the starting solution in the predetermined ranges, Type X zeolites are obtained wherein the $SiO_2/Al_2O_3$ ratio is between 1.6 and 2.9 and the $Na_2O/Al_2O_3$ ratio is between 0.8 and 1.1.

10. Process as per Claim 6, characterized by the fact that by adjusting the composition of the starting solution in the predetermined ranges, type Y zeolites are obtained wherein the $SiO_2/Al_2O_3$ ratio is between 1.5 and 6 and the $Na_2O/Al_2O_3$ ratio is between 0.8 and 1.1.

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | FR-A-2 543 939   (SIPAC, BE)<br>* Claims 1-3,5,13,22; page 2, line 15 - page 3, line 25; page 4, lines 6-14; page 5, line 25 - page 6, line 10; page 7, line 16 - page 8, line 16; example 1, pages 14-21 * | 1,2,4,8 | C 01 B 33/34 |
| A | WORLD PATENTS INDEX LATEST, accession no. 83-744500, week 34, Derwent Publications Ltd, London, GB;<br>& JP-A-58 120 512 (Y. KANAJI, JP) 18-07-1983 | | |
| A | DD-A-2 274 19   (VEB CHEMIEKOMBINAT BITTERFELD, DE) | | |

| | |
|---|---|
| | TECHNICAL FIELDS SEARCHED (Int. Cl.5) |
| | C 01 B |

The present search report has been drawn up for all claims

| Place of search | Date of completion of search | Examiner |
|---|---|---|
| The Hague | 25 June 91 | RIGONDAUD B.P.A. |

CATEGORY OF CITED DOCUMENTS
X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document